# EUROPÄISCHE PATENTANMELDUNG

(11) **EP 3 508 719 A1**
(43) Veröffentlichungstag der Anmeldung: **10.07.2019**
(21) Anmeldenummer: 19150017.2
(22) Anmeldetag: 02.01.2019
(51) Int. Cl.: F03D 1/06, F03D 80/30

(54) **BLATTSPITZEN-BAUTEIL FÜR EIN ROTORBLATT EINER WINDENERGIEANLAGE UND VERFAHREN ZUM HERSTELLEN EINES BLATTSPITZEN-BAUTEILS**

(30) Priorität: 05.01.2018 DE 102018000025
(71) Anmelder: Senvion GmbH, 22297 Hamburg (DE)
(72) Erfinder: Flach, Christian, 24783 Österrönfeld (DE); Bennoit, Christopher, 24811 OWSCHLAG (DE)
(74) Vertreter: Glawe, Delfs, Moll

(57) **Zusammenfassung**

Blattspitzen-Bauteil für ein Rotorblatt (18) einer Windenergieanlage. Das Blattspitzen-Bauteil (26) umfasst einen als Blattspitzenrezeptor (30) ausgebildeten Blitzschutzrezeptor, der ein distales Ende (29) des Blattspitzen-Bauteils (26) bildet. Das Blattspitzen-Bauteil umfasst außerdem ein Anschlussteil (32), das an einem proximalen Ende (28) des Blattspitzen-Bauteils (26) angeordnet ist. Der Blattspitzenzrezeptor (30) und das Anschlussteil (32) sind durch einen Holm (31) aus einem elektrisch leitenden Material verbunden. Die Erfindung betrifft außerdem ein Verfahren zum Herstellen eines solchen Blattspitzen-Bauteils.

## Beschreibung

Die Erfindung betrifft ein Blattspitzen-Bauteil für ein Rotorblatt einer Windenergieanlage. Die Erfindung betrifft außerdem ein Verfahren zum Herstellen eines Blattspitzen-Bauteils

Im Bereich der Blattspitze eines Rotorblatts stellen sich besondere aerodynamische Anforderungen. Es kann deswegen zweckmäßig sein, die Blattspitze in Form eines separaten Blattspitzen-Bauteils bereitzustellen, das mit dem Körper des Rotorblatts verbunden werden kann. Dabei ist zu beachten, dass die Blattspitze besonders empfänglich für Blitzeinschläge ist. An der Blattspitze sollte deswegen ein Blitzschutzrezeptor angeordnet sein, der die elektrische Ladung von einem Blitzschlag aufnehmen kann und zu dem Körper des Rotorblatts überleiten kann.

Der Erfindung liegt die Aufgabe zugrunde, ein Blattspitzen-Bauteil für ein Rotorblatt einer Windenergieanlage sowie ein Verfahren zum Herstellen eines solchen Blattspitzen-Bauteils vorzustellen, so dass diese Funktionen erfüllt sind und das Blattspitzen-Bauteil günstig in der Herstellung ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Das erfindungsgemäße Blattspitzen-Bauteil umfasst einen als Blattspitzenrezeptor ausgebildeten Blitzschutzrezeptor, der ein distales Ende des Blattspitzen-Bauteils bildet. Ein Anschlussteil ist an einem proximalen Ende des Blattspitzen-Bauteils angeordnet. Der Blattspitzenrezeptor und das Anschlussteil sind durch einen Holm aus einem elektrisch leitenden Material verbunden.

Mit der Erfindung wird also ein Holm vorgeschlagen, der sowohl eine mechanische Funktion als auch eine elektrische Funktion hat. Die Erfindung hat erkannt, dass mit einem solchen Holm, mehrere Wirkungen auf vorteilhafte Weise miteinander kombiniert werden können. Zum einen kann durch den Holm zuverlässig gewährleistet werden, dass elektrische Ladungen vom distalen Ende des Blattspitzen-Bauteils zum proximalen Ende übergeleitet werden. Zum anderen kann durch die tragende Funktion des Holms sichergestellt werden, dass die Blattspitze eine definierte Position und Ausrichtung relativ zu dem Anschlussteil hat, wodurch eine präzise Gestaltung der aerodynamischen Eigenschaften des Blattspitzen-Bauteils möglich wird.

Ein Rotorblatt einer Windenergieanlage erstreckt sich allgemein zwischen einer am proximalen Ende angeordneten Blattwurzel und einer am distalen Ende angeordneten Blattspitze. Ein der Blattwurzel zugewandtes Element wird als proximal bezeichnet, ein der Blattspitze zugewandtes Element wird als distal bezeichnet.

Der Blattspitzenrezeptor kann aus einem metallischen Material bestehen. Der Holm kann aus einem metallischen Material bestehen. Die beiden Teile können miteinander verschweißt sein. Der Blattspitzenrezeptor kann eine dem Holm zugewandte proximale Abschlussfläche haben, die eben ist. Ausgehend von der Abschlussfläche kann sich eine abgerundete Form erstrecken, die die Form der Blattspitze definiert. Der Blattspitzenrezeptor kann aus Vollmaterial gefertigt sein oder einen Hohlraum aufweisen.

Das Anschlussteil kann aus einem elektrisch leitenden Material, insbesondere aus einem metallischen Material bestehen. Eine stabile Einheit aus dem Blitzschutzrezeptor an der Blattspitze, dem Holm und dem Anschlussteil kann gebildet werden, wenn alle Teile miteinander verschweißt sind.

Der Blattspitzenrezeptor und das Anschlussteil können durch einen einzelnen Holm miteinander verbunden sein. Möglich ist auch, dass sich mehrere Holme zwischen dem Blattspitzenrezeptor und dem Anschlussteil erstrecken. Die mehreren Holme können parallel zueinander ausgerichtet sein.

Das Blattspitzen-Bauteil kann im Bereich des Anschlussteils einen Querschnitt in Form eines Tragflächenprofils haben. Das Tragflächenprofil kann sich von einer Vorderkante des Blattspitzen-Bauteils bis zu einer Hinterkante des Blattspitzen-Bauteils erstrecken. Das Tragflächenprofil kann so gestaltet sein, dass ein von der Vorderkante zu der Hinterkante fließender Luftstrom auf einer Seite des Blattspitzen-Bauteils eine höhere Strömungsgeschwindigkeit hat als auf der anderen Seite des Blattspitzen-Bauteils. Die Seite mit der höheren Strömungsgeschwindigkeit wird als Saugseite bezeichnet. Die Seite mit der niedrigeren Strömungsgeschwindigkeit wird als Druckseite bezeichnet.

Das Anschlussteil kann als zweiter Blitzschutzrezeptor ausgebildet sein. Dazu kann das Blattspitzen-Bauteil so gestaltet sein, dass ein Oberflächenabschnitt des Blattspitzen-Bauteils durch das Anschlussteil gebildet wird. Der Oberflächenabschnitt kann sich ohne Unterbrechung von einer Vorderkante des Blattspitzen-Bauteils bis zu einer Hinterkante des Blattspitzen-Bauteils erstrecken. Der Oberflächenabschnitt kann sich über eine Saugseite und/oder eine Druckseite des Blattspitzen-Bauteils erstrecken.

Der Holm kann einen proximalen Abschnitt umfassen, der sich im Wesentlichen parallel zu einer Ebene erstreckt, die im Bereich des Anschlussteils durch die Vorderkante und die Hinterkante aufgespannt wird. Mit zunehmendem Abstand von dem Anschlussteil kann der Holm aus dieser Ebene heraus gebogen sein. Die Biegung kann sich in Richtung der Saugseite des Blattspitzen-Bauteils erstrecken. Die durch den Blattspitzenrezeptor gebildete Blattspitze kann in Verlängerung eines distalen Endes des Holms angeordnet sein. Das Blattspitzen-Bauteil hat dann die Form eines Winglets.

Eine Ebene, die im Bereich der Blattspitze durch die Vorderkante und die Hinterkante aufgespannt wird, kann mit einer Ebene, die im Bereich des Anschlussteils durch die Vorderkante und die Hinterkante aufgespannt wird, einen Winkel zwischen 60° und 90°, vorzugsweise zwischen 70° und 80° einschließen. Ein distales Ende des Blattspitzenrezeptors kann einen Abstand zwischen 0,1 m und 1,5 m, vorzugsweise zwischen 0,2 m und 0,8 m zu der Ebene haben, im Bereich des Anschlussteils durch die Vorderkante und die Hinterkante aufgespannt wird.

Das Blattspitzen-Bauteil kann Bestandteile aus einem Kunststoffmaterial umfassen. Das Kunststoffmaterial kann elektrisch isolierend sein. Wenn der Blattspitzenrezeptor und das Anschlussteil durch den Holm in einem Abstand zueinander gehalten werden, ist zwischen dem Blattspitzenrezeptor und dem Anschlussteil ein Raum eingeschlossen. Das Kunststoffmaterial kann in diesem Raum angeordnet sein.

Das Kunststoffmaterial kann ein Vergussmaterial sein, das in flüssiger Form in den Freiraum eingebracht wird und dann aushärtet. Das Vergussmaterial kann beispielsweise Epoxidharz sein. Möglich ist auch, dass das Kunststoffmaterial eine Sandwichstruktur bildet mit einem innenliegenden Kernmaterial, das in ein Vergussmaterial eingebettet ist. Die Sandwichstruktur kann zusätzlich eine oder mehrere Lagen aus einem Fasermaterial umfassen, beispielsweise in Form von Glasfasermatten. Durch das Aushärten des Vergussmaterials kann das Blattspitzen-Bauteil die gewünschte Stabilität erhalten. Das Sandwich-Kernmaterial kann eine geringere Dichte haben als das Vergussmaterial. Die Dichte des Kernmaterials kann beispielsweise zwischen 40 kg/m³ und 150 kg/m³ liegen kann. In Betracht als Kernmaterial kommen beispielsweise Schaummaterialien (PET, PVC, SAN) oder Balsaholz.

Der Holm kann eine oder mehrere Durchbrechungen aufweisen. Die Durchbrechungen können sich quer zu einer Längsrichtung des Blattspitzen-Bauteils erstrecken. Als Längsrichtung wird die Richtung zwischen dem proximalen Ende und dem distalen Ende des Blattspitzen-Bauteils bezeichnet. Insbesondere können die Durchbrechungen sich zwischen der Vorderkante und der Hinterkante des Blattspitzen-Bauteils erstrecken. Mit solchen Durchbrechungen kann einerseits das Gewicht des Blattspitzen-Bauteils vermindert werden. Andererseits kann es die Stabilität des Blattspitzen-Bauteils fördern, wenn ein Vergussmaterial in den durch die Durchbrechung gebildeten Hohlraum eindringen kann und dadurch eine innige Verbindung mit dem Holm eingehen kann.

In einer Ausführungsform wird der Holm durch das Kunststoffmaterial bedeckt, so dass der Holm keinen direkten Kontakt zu der Oberfläche des Blattspitzen-Bauteils hat. Möglich ist auch, dass eine Oberfläche des Holms zugleich einen Oberflächenabschnitt des Blattspitzen-Bauteils bildet. Diese Bereiche des Holms können dann als weitere Blitzschutzrezeptoren dienen.

Die Oberfläche des Holms kann bündig mit der angrenzenden Oberfläche des Kunststoffmaterials abschließen. Die Wirksamkeit als Blitzschutzrezeptor kann verbessert werden, wenn der Holm gegenüber einem benachbarten Oberflächenabschnitt des Blattspitzen-Bauteils vorspringt. Beispielsweise kann der Holm einen Überstand mit einer Höhe zwischen 0,5 mm und 2 mm bilden. Es kann ausreichen, wenn eine Kante des Holms gegenüber dem benachbarten Oberflächenabschnitt vorspringt.

Das Blattspitzen-Bauteil kann eine Finne umfassen, die gegenüber einer Oberfläche des Blattspitzen-Bauteils nach außen vorspringt. Eine solche Finne kann dazu beitragen, Luftverwirbelungen im Bereich der Blattspitze zu vermindern. Im Bereich der Finne wird die vorbeiströmende Luft entlang der Oberfläche der Finne geleitet werden, so dass eine unerwünschte Ablenkung der Luftströme vermieden wird. Die Finne kann sich quer zu einer Längsrichtung des Blattspitzen-Bauteils erstrecken. Die Höhendimension der Finne kann einen rechten Winkel einschließen mit der Oberfläche, gegenüber der die Finne vorspringt, und/oder mit einer Längsachse des Rotorblatts. Möglich ist auch ein vom rechten Winkel abweichender Winkel, beispielsweise ein Winkel zwischen 60° und 90°, vorzugsweise zwischen 70° und 90°.

Die Finne kann aus einem metallischen Material bestehen und in einem elektrisch leitenden Kontakt mit dem Blattspitzenrezeptor, dem Holm und/oder dem Anschlussteil stehen. Die Finne kann dann als weiterer Blitzschutzrezeptor wirken. In einer Ausführungsform springt die Finne gegenüber einer von dem Anschlussteil gebildeten Fläche des Blattspitzen-Bauteils vor. Die Finne kann sich in der entgegengesetzten Richtung erstrecken wie die Blattspitze. Die Finne kann gegenüber der Druckseite des Blattspitzen-Bauteils vorspringen.

Das Anschlussteil kann dazu ausgelegt sein, eine Verbindung zu einem Körper eines Rotorblatts herzustellen. Das Anschlussteil kann dazu eine proximale Anschlussfläche umfassen, die dazu bestimmt ist, an einer Gegenfläche des Rotorblattkörpers anzuliegen. Die Anschlussfläche kann eben sein. Die Anschlussfläche kann rechtwinklig zu einer Längsachse des Rotors ausgerichtet sein. In der Anschlussfläche können Passstifte und/oder Passbohrungen ausgebildet sein, die mit jeweils passenden Gegenelementen in der Gegenfläche zusammenwirken können, um eine eindeutige Position des Blattspitzen-Bauteils relativ zu dem Rotorblattkörper zu definieren. Zusätzlich oder alternativ dazu kann eine Schraubverbindung vorgesehen sein, um das Blattspitzen-Bauteil relativ zu dem Rotorblattkörper zu fixieren. In der Anschlussfläche kann ein Entwässerungskanal ausgebildet sein, durch die Wasser aus einem Innenraum des Rotorblatts nach außen treten kann.

Die Erfindung betrifft außerdem ein Rotorblatt mit einem solchen Blattspitzen-Bauteil. Das Blattspitzen-Bauteil ist über das Anschlussteil mit einem Körper des Rotorblatts verbunden. Die Kontur des Anschlussteils kann bündig mit der Kontur des Rotorblattkörpers abschließen. Der Blattspitzenrezeptor kann über den Holm elektrisch mit einer Blitzschutzeinrichtung des Rotorblatts gekoppelt sein. Die Erfindung betrifft außerdem eine Windenergieanlage, mit einem Rotor mit einer Mehrzahl von Rotorblättern, wobei die Rotorblätter jeweils mit einem erfindungsgemäßen Blattspitzen-Bauteil ausgestattet sind.

Die Erfindung betrifft ferner ein Verfahren zum Herstellen eines Blattspitzen-Bauteils, bei dem ein Blattspitzenrezeptor und ein Anschlussteil über einen Holm miteinander verbunden werden, bei dem die Einheit aus dem Blattspitzenrezeptor, dem Anschlussteil und dem Holm in eine Negativform eingelegt werden und bei dem ein Vergussmaterial in die Negativform eingeführt wird. Nach dem Aushärten des Vergussmaterials kann das Blattspitzen-Bauteil aus der Negativform entnommen werden.

Das Verfahren kann so durchgeführt werden, dass vor dem Einführen des Vergussmaterials in die Negativform ein Kernmaterial in die Negativform eingelegt wird. Ferner kann zur Verstärkung des Sandwichaufbaus ein Fasermaterial in die Negativform eingelegt werden.

Das Verfahren kann mit weiteren Merkmalen fortgebildet werden, die im Zusammenhang des erfindungsgemäßen Blattspitzen-Bauteils beschrieben sind. Das Blattspitzen-Bauteil kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: ein erfindungsgemäßes Rotorblatt;
- Fig. 3:: einen Schnitt entlang Linie A-A durch das Rotorblatt gemäß Fig. 2;
- Fig. 4 bis 8:: verschiedene Ansichten einer ersten Ausführungsform eines erfindungsgemäßen Blattspitzen-Bauteils;
- Fig. 9 bis 13:: verschiedene Ansichten einer zweiten Ausführungsform eines erfindungsgemäßen Blattspitzen-Bauteils.

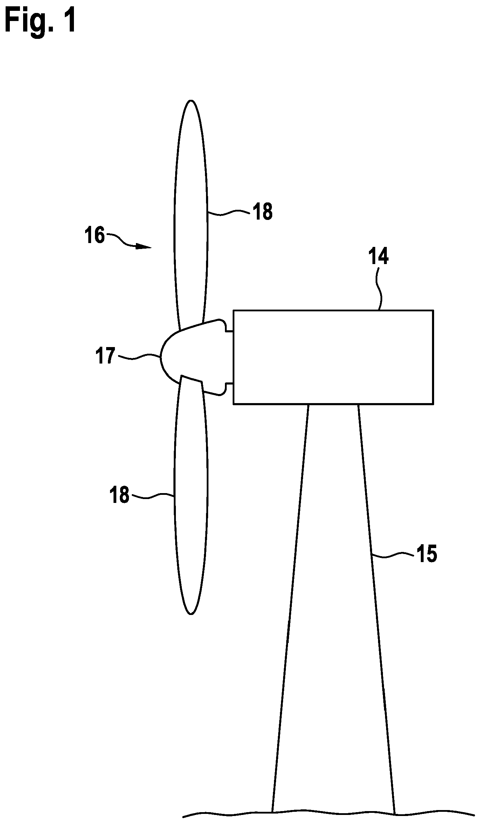

Bei einer Windenergieanlage gemäß Fig. 1 ist eine Gondel 14 drehbar auf einem Turm 15 angeordnet. Die Gondel 14 trägt einen Rotor 16, der eine Rotornabe 17 und eine Mehrzahl von an der Rotornabe 17 befestigten Rotorblättern 18 umfasst. Im Betrieb der Windenergieanlage wird die Gondel 14 so relativ zu dem Turm 15 gedreht, dass der Rotor 16 in Windrichtung ausgerichtet ist. Der durch den Wind in Drehung versetzte Rotor 16 treibt über eine Rotorwelle einen Generator an, um elektrische Energie zu erzeugen. Die elektrische Energie wird in ein Anschlussnetz eingespeist.

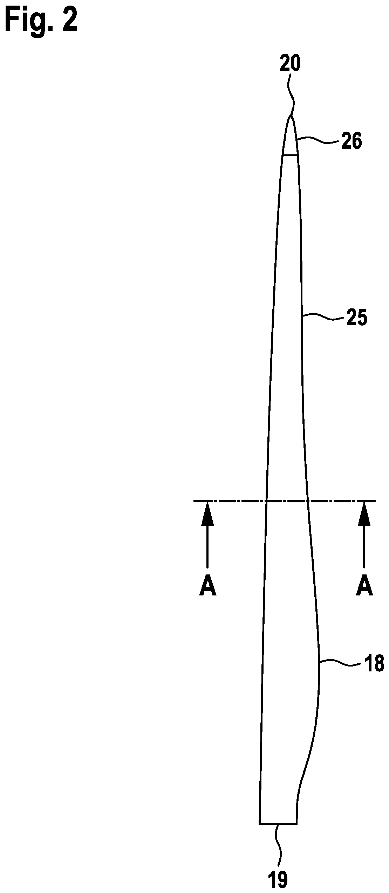

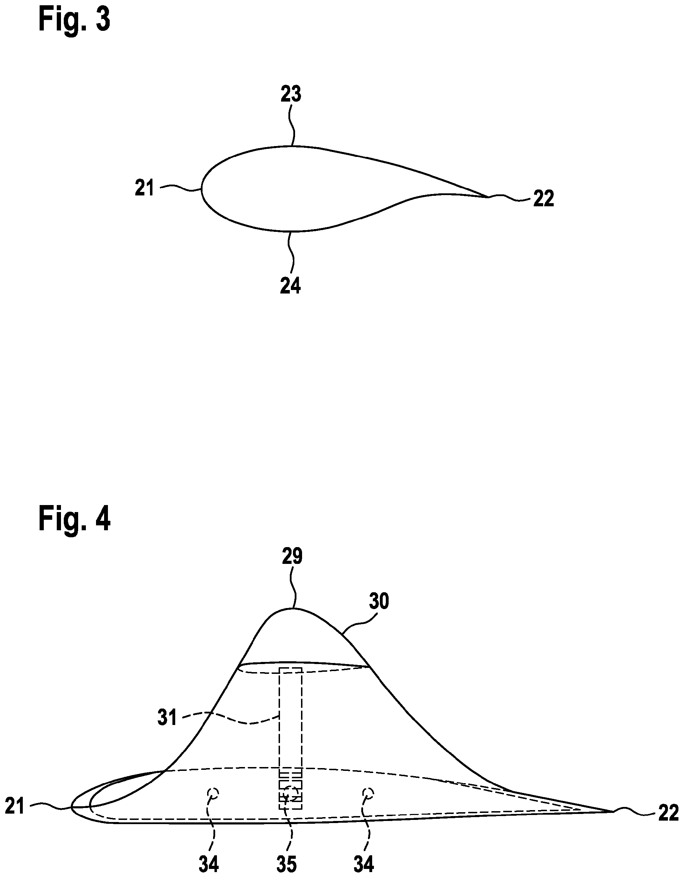

Jedes Rotorblatt 18 erstreckt sich gemäß Fig. 2 in Längsrichtung von einer proximalen Blattwurzel 19 bis zu einer distalen Blattspitze 20. Wie die Schnittdarstellung in Fig. 3 zeigt, erstreckt das Rotorblatt 18 sich im Querschnitt zwischen einer Vorderkante 21 und einer Hinterkante 22. Der Querschnitt bildet ein Tragflächenprofil mit einer Saugseite 23 und einer Druckseite 24. Das Rotorblatt 18 ist aus einem Rotorblattkörper 25 und einem Blattspitzen-Bauteil 26 zusammengesetzt, die miteinander verschraubt sind.

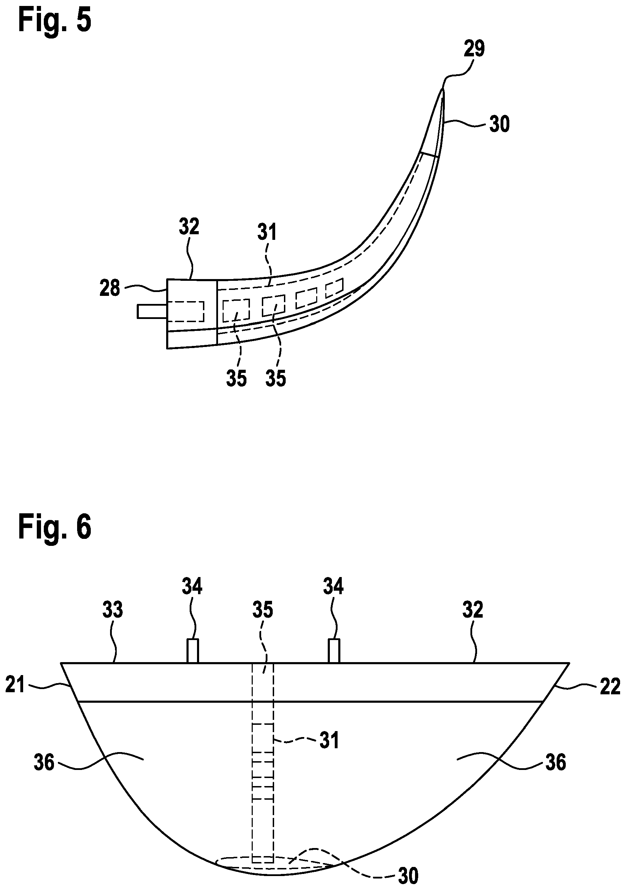

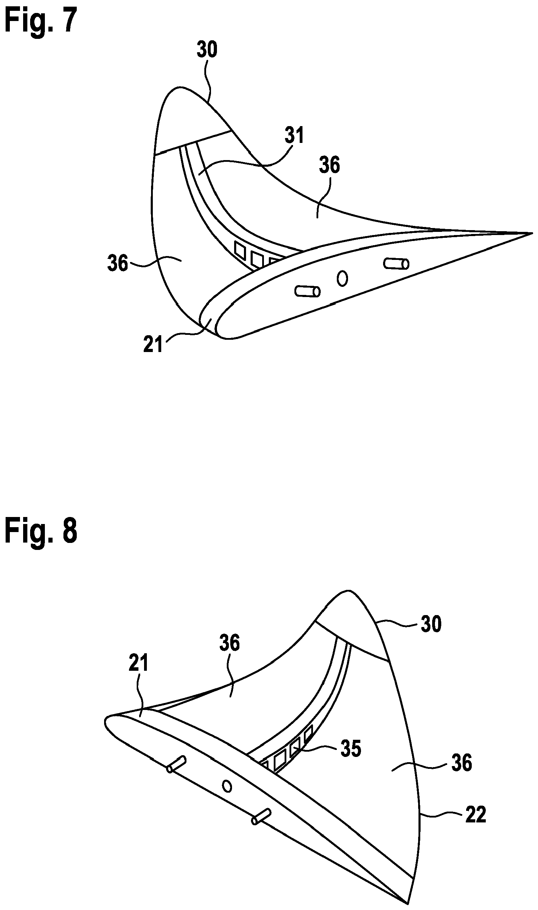

Das Blattspitzen-Bauteil 26 erstreckt sich gemäß den Fig. 4 bis 8 zwischen einem proximalen Ende 28 und einem distalen Ende 29. Das distale Ende 29 wird von einem metallenen Blattspitzenrezeptor 30 gebildet, der über einen Steg 31 mit einem Anschlussteil 32 verbunden ist. Das Anschlussteil 32 hat eine proximale Anschlussfläche 33, die flächig auf einer Gegenfläche am distalen Ende des Rotorblattkörpers 25 aufliegt, wenn das Blattspitzen-Bauteil 26 mit dem Rotorblattkörper 25 verbunden ist. Die Anschlussfläche 33 ist mit zwei Passstiften 34 versehen, die in entsprechende Passbohrungen in der Gegenfläche des Rotorblattkörpers eingreifen. Das Blattspitzen-Bauteil 26 wird über einen Schraubbolzen, der in eine Gewindebohrung 35 des Anschlussteils 32 eingreift, mit dem Rotorblattkörper 25 verbunden. Die Anschlussfläche 33 hat eine Tragflächenkontur, die bündig mit der Kontur des Rotorblattkörpers 25 abschließt.

Die Anschlussfläche 33 ist rechtwinklig zu einer Längsachse des Rotorblatts 18 ausgerichtet. Durch die Vorderkante 21 und die Hinterkante 22 im Bereich des Anschlussteils 32 wird eine Ebene aufgespannt, die sich im Wesentlichen in Verlängerung der Längsachse des Rotorblatts 18 erstreckt. Das proximale Ende des Stegs 31 ist in dieser Ebene angeordnet. Das distale Ende des Stegs 31 ist in Saugrichtung aus dieser Ebene herausgebogen. Der Blattspitzenrezeptor 30 ist in Verlängerung des distalen Endes des Stegs 31 angeordnet, so dass das Blattspitzen-Bauteil 26 insgesamt die Form eines Winglets hat.

Der Steg 31, der Blattspitzenrezeptor 30 und das Anschlussteil 32 bestehen aus einem metallischen Material. Die drei Teile sind miteinander verschweißt und bilden eine stabile Einheit. Zum Herstellen des Blattspitzen-Bauteils 26 wird diese Einheit in eine Negativform eingelegt. Die Negativform wird mit einem Vergussmaterial aus Kunststoff gefüllt. Das Vergussmaterial 36 dringt insbesondere in Durchbrechungen 35 ein, die in dem Steg 31 ausgebildet sind. Nach dem Aushärten des Vergussmaterials 36 kann das fertige Blattspitzen-Bauteil 26 aus der Negativform entnommen werden.

Der Blattspitzenrezeptor 30, der Steg 31 und das Anschlussteil 32 bilden eine durchgehende elektrisch leitende Einheit. Wenn das Blattspitzen-Bauteil 26 mit dem Rotorblattkörper 25 verbunden ist, besteht eine elektrische Verbindung zu einem Blitzschutzsystem des Rotorblatts 18. Das Blitzschutzsystem ist dazu ausgelegt, elektrische Ladungen von einem Blitzschlag über die Blattwurzel 19, die Rotornabe 17, die Gondel 14 und den Turm 15 zur Erde abzuleiten.

Die Blitzschutzrezeptoren des Blattspitzen-Bauteils 26 werden damit zu einem Teil des Blitzschutzsystems der Windenergieanlage. Als Blitzschutzrezeptoren wirken insbesondere der Blattspitzenrezeptor 30 und das Anschlussteil 32, die jeweils einen metallischen Oberflächenanteil des Blattspitzen-Bauteils 26 bilden und damit besonders empfänglich für Blitzeinschläge sind. Einen weiteren Blitzschutzrezeptor kann der Steg 31 bilden, wenn dieser sich bis an die Oberfläche des Blattspitzen-Bauteils 26 erstreckt oder sogar geringfügig über die umgebende Oberfläche hinausragt. In anderen Ausführungsformen ist der Steg 31 in das elektrisch isolierende Vergussmaterial 36 eingeschlossen, so dass der Steg 31 nicht als Blitzschutzrezeptor wirken kann.

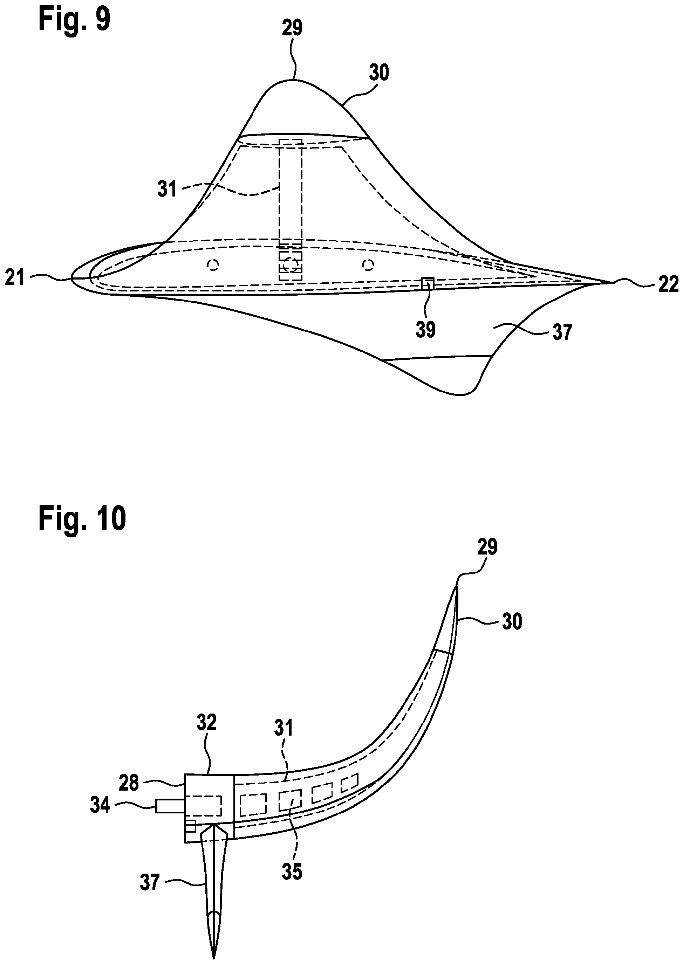

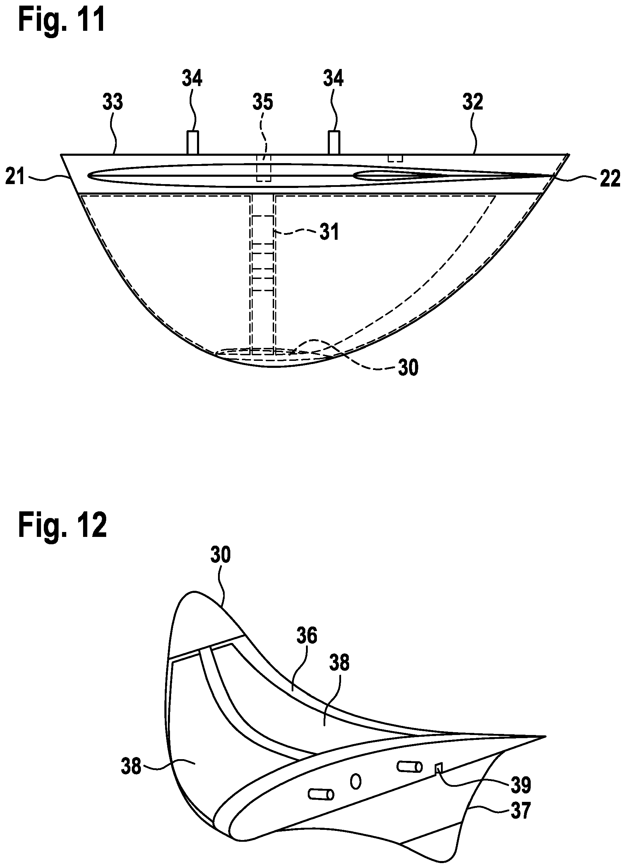

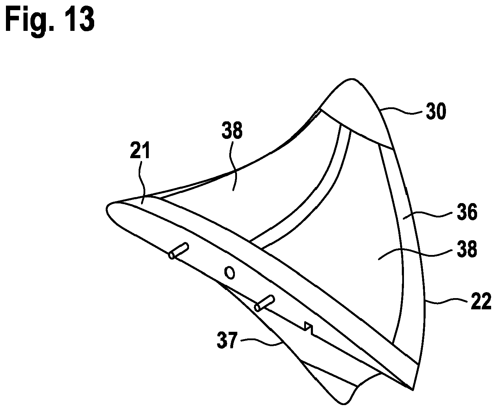

Bei der Ausführungsform gemäß den Fig. 9 bis 13 ist das Anschlussteil 32 mit einer Finne 37 versehen, die sich von dem Anschlussteil 32 in Druckrichtung erstreckt. Im Betrieb des Rotors wird die Luftströmung entlang der Oberfläche der Finne 37 geleitet, so dass eine Ablenkung des Luftstroms nach außen und damit einhergehende Verwirbelungen vermieden werden.

Die Finne 37 besteht aus demselben metallischen Material wie das Anschlusselement 32 und ist einheitlich mit dem Anschlusselement 32 verbunden. Die Finne 37 bildet damit einen weiteren Blitzschutzrezeptor des Blitzschutzsystems.

In der Anschlussfläche 33 des Anschlussteils 32 ist ein Entwässerungskanal 39 ausgebildet, über den Wasser aus dem Innenraum des Rotorblatts 18 nach außen geleitet werden kann.

Bei der Herstellung des Blattspitzen-Rezeptors 26 gemäß dieser Ausführungsform wird zunächst ein Kernmaterial 38 in den Freiraum zwischen dem Blattspitzenrezeptor 30 und dem Anschlussteil 32 eingelegt, das eine geringere Dichte hat als das Vergussmaterial 36. Erst danach wird die Negativform mit dem Vergussmaterial 36 gefüllt. Durch die Verwendung des Kernmaterials 38 kann das Gewicht des Blattspitzen-Bauteil 26 verglichen mit der in den Fig. 4 bis 8 gezeigten Ausführungsform vermindert werden.

## Patentansprüche

1. Blattspitzen-Bauteil für ein Rotorblatt (18) einer Windenergieanlage mit einem als Blattspitzenrezeptor (30) ausgebildeten Blitzschutzrezeptor, der ein distales Ende (29) des Blattspitzen-Bauteils (26) bildet, und mit einem Anschlussteil (32), das an einem proximalen Ende (28) des Blattspitzen-Bauteils (26) angeordnet ist, wobei der Blattspitzenzrezeptor (30) und das Anschlussteil (32) durch einen Holm (31) aus einem elektrisch leitenden Material verbunden sind.

2. Blattspitzen-Bauteil nach 1, **dadurch gekennzeichnet, dass** der Blattspitzenrezeptor (26), der Holm (31) und/oder das Anschlussteil (32) miteinander verschweißt sind.

3. Blattspitzen-Bauteil nach Anspruch 1 oder 2, **dadurch gekennzeichnet, dass** ein Oberflächenabschnitt des Blattspitzen-Bauteils (26) durch das Anschlussteil (32) gebildet wird.

4. Blattspitzen-Bauteil nach Anspruch 3, **dadurch gekennzeichnet, dass** der Oberflächenabschnitt sich von einer Vorderkante (21) des Blattspitzen-Bauteils (26) bis zu einer Hinterkante (22) des Blattspitzen-Bauteils (26) erstreckt.

5. Blattspitzen-Bauteil nach einem der Ansprüche 1 bis 4, **dadurch gekennzeichnet, dass** ein distaler Abschnitt des Holms (31) aus einer Ebene heraus gebogen ist, die im Bereich des Anschlussteils (32) durch eine Vorderkante (21) und eine Hinterkante (22) des Blattspitzen-Bauteils (26) aufgespannt ist.

6. Blattspitzen-Bauteil nach einem der Ansprüche 1 bis 5, dass in einem Raum zwischen dem Blattspitzenrezeptor (30) und dem Anschlussteil (32) ein Kunststoffmaterial (36, 38) angeordnet ist.

7. Blattspitzen-Bauteil nach Anspruch 6, **dadurch gekennzeichnet, dass** das Kunststoffmaterial (36, 38) einen Sandwichaufbau hat mit einem innenliegenden Kernmaterial (38), der in ein Vergussmaterial (36) eingebettet ist.

8. Blattspitzen-Bauteil nach einem der Ansprüche 1 bis 7, **dadurch gekennzeichnet, dass** der Holm (31) eine oder mehrere Durchbrechungen (35) aufweist.

9. Blattspitzen-Bauteil nach einem der Ansprüche 1 bis 8, **dadurch gekennzeichnet, dass** ein Oberflächenabschnitt des Blattspitzen-Bauteils (26) durch den Holm (31) gebildet wird.

10. Blattspitzen-Bauteil nach Anspruch 9, **dadurch gekennzeichnet, dass** der Holm (31) gegenüber einem benachbarten Oberflächenabschnitt des Blattspitzen-Bauteils (26) vorspringt.

11. Blattspitzen-Bauteil nach einem der Ansprüche 1 bis 10, **gekennzeichnet durch** eine von dem Anschlussteil (32) vorspringende Finne (37).

12. Blattspitzen-Bauteil nach einem der Ansprüche 1 bis 11, **dadurch gekennzeichnet, dass** das Anschlussteil (32) eine proximale Anschlussfläche (33) hat, die dazu bestimmt ist, an einer Gegenfläche eines Rotorblattkörpers anzuliegen.

13. Blattspitzen-Bauteil nach Anspruch 12, **dadurch gekennzeichnet, dass** die Anschlussfläche (33) einen Entwässerungskanal (39) aufweist.

14. Verfahren zum Herstellen eines Blattspitzen-Bauteils, bei dem ein Blattspitzenrezeptor (30) und ein Anschlussteil (32) über einen Holm (31) miteinander verbunden werden, bei dem die Einheit aus dem Blattspitzenrezeptor (30), dem Holm (31) und dem Anschlussteil (32) in eine Negativform eingelegt werden und bei dem ein Vergussmaterial (36) in die Negativform eingeführt wird.
